# EUROPÄISCHE PATENTSCHRIFT

(11) **EP 1 695 158 B1**
(45) Veröffentlichungstag und Bekanntmachung des Hinweises auf die Patenterteilung: **24.02.2010**
(21) Anmeldenummer: 04819652.1
(22) Anmeldetag: 03.12.2004
(51) Int. Cl.: G05B 19/042, H02H 9/00

(54) **EIGENSICHERE DATENÜBERTRAGUNGSEINRICHTUNG**
INTRINSICALLY SAFE DATA TRANSMISSION DEVICE
DISPOSITIF DE TRANSMISSION DE DONNEES A SECURITE INTRINSEQUE

(30) Priorität: 05.12.2003 DE 10356985
(43) Veröffentlichungstag der Anmeldung: 30.08.2006
(73) Patentinhaber: Cooper Crouse-Hinds GmbH, 59494 Soest (DE)
(72) Erfinder: BECKER, Udo, 47169 Duisburg (DE); SCHARFENBERG, Manfred, 59425 Unna (DE)
(74) Vertreter: Grünecker, Kinkeldey, Stockmair & Schwanhäusser Anwaltssozietät
(86) Internationale Anmeldenummer: PCT/EP2004/013778
(87) Internationale Veröffentlichungsnummer: WO 2005/054966

(56) Entgegenhaltungen:
- EP-A- 1 202 139
- WO-A-96/31815
- DE-A1- 19 910 409
- US-A1- 2002 097 031
- JOHANNSMEYER U: "Fieldbus for process automation in hazardous locations-actual developments" INTERNATIONAL CONFERENCE ON EXPLOSION SAFETY IN HAZARDOUS AREAS (CONF. PUBL. NO.469), 1999, Seiten 61-67, XP002317460 LONDON, UK ISBN: 0-85295-723-3
- "Explosionsschutz" Oktober 2003 (2003-10), SIEMENS AG, AUTOMATION AND DRIVES, PROCESS INSTRUMENTATION AND ANALYTICS , KARLSRUHE , XP002317461 Im Internet gefunden: https://pia.khe.siemens.com/efiles/ feldg/files/broschueren/Explosionprotectio n_ge.pdf Siemens-Bestellnr: A5E00265041 Seite 33 - Seite 34

## Beschreibung

Die Erfindung betrifft eine Datenübertragungseinrichtung mit wenigstens einer Datenadaptionseinrichtung und einer Datenverteileinrichtung, welche zwischen zumindest einem Prozessleitrechner und mit diesem über ein Bussystem verbundenen Feldgeräten verschaltet ist, wobei Prozessleitrechner und zugeordnete Feldgeräte Teil eines Prozessleitsystems sind und die Datenübertragungseinrichtung insbesondere eigensicher ist.

Ein solches Prozessleitsystem ist aus der Praxis bekannt und dient beispielsweise zur Datenübertragung zwischen ein Sensorsystem bildenden Feldgeräten und dem zugeordneten Prozessleitrechner. Die Datenübertragung erfolgt in der Regel digital über ein entsprechendes Bussystem. Da die Feldgeräte aus Kostengründen mit niedrigen Baudraten kommunizieren und ansonsten die Kommunikation im Leitsystem mit hohen Baudraten erfolgt, ist eine Datenübertragungseinrichtung zwischen Prozessleitrechner und zugeordneten Feldgeräten verschaltet. Diese weist zumindest eine Datenadaptionseinrichtung und eine Datenverteileinrichtung auf. Durch die Datenadaptionseinrichtung erfolgt eine entsprechende Anpassung der Daten zur Übertragung zwischen Sensorsystem und Leitsystem insbesondere im Hinblick auf die unterschiedlichen Übertragungsraten. Die Datenverteileinrichtung ist beispielsweise ein zwischen Datenadaptionseinrichtung und Feldgeräten verschalteter Rangierverteiler. Dieser verteilt die in der Regel über ein Vieladerkabel von der Datenadaptionseinrichtung zugeführten Daten auf beispielsweise Zweiaderkabel zur Weiterführung der Daten an entsprechende Feldgeräte.

In der Regel sind zumindest Datenverteileinrichtung und Feldgerät in einem explosionsgeschützten Bereich (Ex-Bereich) angeordnet. In einem solchen Ex-Bereich sind die Verbindungen eigensicher (ex-i) ausgebildet und es kann nur mit begrenzter Energie in einem Stromkreis gearbeitet werden.

Nachteilig bei der vorbekannten Datenübertragungseinrichtung ist, dass in der Praxis maximal vier Feldgeräte an einem Stromkreis, d. h. an einer Datenadaptionseinrichtung, angeschlossen werden können. Dadurch erhöhen sich die Kosten pro Feldgerät.

JOHANNSMEYER U: "Fieldbus for proceses automation in hazardous locations-actual developments" INTERNATIONAL CONFERENCE ON EXPLOSION SAFETY IN HAZARDOUS AREAS (CONF. PUBL. NO. 469), 1999, Seiten 61 bis 67, XP002317460 LONDON; UK ISBN: 0-85295-723-3 offenbart ein Feldbussystem, bei dem jedes einzelne Feldgerät eine entsprechende Barriererichtung aufweist. Jede Datenübertragungseinrichtung ist mit einer zugeordneten Speiseeinrichtung als Teil der Datenadaptionseinrichtung versehen. Eine Netzversorgung erfolgt direkt im Ex-Bereich und von der Datenübertragungseinrichtung an eine Reihe von Feldgeräten und gegebenenfalls über dazwischen verschaltete Datenverteilungseinrichtung.

DE 199 10 409 A1 zeigt eine Feldbusverteileinrichtung zwischen einem Feldbuskoppler und einzelnen Feldgeräten. Diese dient zur Aufsplittung der entsprechenden Signale auf die eigensicheren Stromkreise. Im Feldbusverteiler ist ein Spannungsbegrenzungsmittel vorgesehen, wobei anschließend die Anschlüsse für die einzelnen Feldgeräte vorgesehen sind.

US 2002/097031 A1 zeigt eine Einrichtung zur variablen Leistungssteuerung, wobei allerdings nichts über explosionsgefährdete Bereiche oder in diesem Zusammenhang auftretenden Probleme geschildert ist.

Der Erfindung liegt die Aufgabe zugrunde, eine Datenübertragungseinrichtung der eingangs genannten Art dahingehend zu verbessern, dass mehr Feldgerät pro Datenadaptionseinrichtung bei gleichzeitiger Reduzierung der Kosten pro Feldgerät angeschlossen werden können.

Diese Aufgabe wird im Zusammenhang mit den Merkmalen des Patentanspruchs 1 dadurch gelöst, dass die Datenadaptionseinrichtung und ihr zugeordnete Speiseeinrichtungen explosionsgeschützt ausgebildet sind und jede Speiseeinrichtung über eine explosionsgeschützte Leitung mit Datenverteileinrichtungen verbunden ist, wobei diese oder mit ihr verbundene Feldgeräte eine Barriereeinrichtung zur Begrenzung der eingespeisten Energie aufweisen.

Erfindungsgemäß sind Datenadaptions- und zugeordnete Speiseeinrichtungen im Ex-Bereich angeordnet. Die Speiseeinrichtung ermöglicht die sichere galvanische Trennung nach Ex-Kriterien und durch die Verlagerung der eigensicheren Signalanpassung auf Datenverteileinrichtung bzw. Feldgerät müssen entsprechende Ausgänge der Speiseeinrichtungen nicht eigensicher ausgeführt sein. Dadurch kann die Belastung pro Stromkreis wesentlich höher als beim Stand der Technik sein und es lassen sich eine Vielzahl von Feldgeräten, beispielsweise 40 bis 50 Sensoren, pro Stromkreis anschließen. Dadurch sinken die Kosten erheblich, ebenso wie der Aufwand für Verkabelung, insbesondere zwischen Datenadaptionseinrichtung und Feldgeräten.

Zur einfachen Anordnung und Integration in bereits vorhandene Systeme im Ex-Bereich können Datenadaptionseinrichtung und/oder Speiseeinrichtung auf eine Trägerplatte aufsteckbar sein, die einen Feldbus zur Kommunikation der Einrichtungen untereinander und mit dem Prozessleitrechner aufweist.

Eine solche Trägerplatte mit entsprechenden Steckmodulen ist beispielsweise in der WO 96/31815 beschrieben. Die Trägerplatte ist modular aufgebaut und kann in einfacher Weise zum zusätzlichen Aufstecken von Datenadaptionseinrichtung und Speiseeinrichtung erweitert werden. Alternativ können bereits vorhandene Module auf der Trägerplatte durch Datenadaptionseinrichtung oder Speiseeinrichtung ersetzt werden.

Um Daten sowohl in der Datenübertragungsrate und/oder Datenformat oder dergleichen anzupassen, kann die Datenadaptionseinrichtung eine Datenanpassungs- und/oder Datenwandelschaltung aufweisen.

Um Datenadaptionseinrichtung und/oder Speiseeinrichtung in einfacher Weise als Steckmodule für die oben genannte Trägerplatte (backplane) auszubilden und im Ex-Bereich anzuordnen, können diese druckfest (ex-d) gekapselt sein.

An dieser Stelle sei angemerkt, dass mehr als eine Speiseeinrichtung an jeder Datenadaptionseinrichtung angeschlossen sein kann, so dass sich dadurch der Aufwand bei der Verkabelung nochmals reduziert und gleichzeitig die Anzahl der Feldgeräte pro Datenadaptionseinrichtung auf 100 und mehr Feldgeräte erhöht wird.

Verfügt die Speiseeinrichtung über wenigstens einen Ausgang mit erhöhter Sicherheit (Ex-e), können in einfacher Weise verschiedene Datenverteileinrichtungen in Serie an diesem Ausgang angeschlossen werden und jede Datenverteileinrichtung kann mit einer Anzahl von Feldgeräten über eigensichere (Ex-i) Leitungen verbunden sein. Solche Ex-i-Leitungen sind allerdings nur dann erforderlich, wenn bereits die Datenverteileinrichtung eine Barriereeinrichtung aufweist.

Sind die Feldgeräte ohne eigensicheren Signalanpassung ausgebildet, kann die Kommunikation zwischen Datenverteileinrichtung und Feldgerät auch über Leitungen erhöhter Sicherheit (Ex-e) erfolgen.

Die Barriereeinrichtung kann als separates Bauteil ausgebildet sein, das einer entsprechenden Datenverteileinrichtung zugeordnet wird. Ebenso ist es möglich, dass die Barriereeinrichtung in der Datenverteileinrichtung oder auch im Feldgerät integriert ist.

Für solche Barriereeinrichtungen sind verschiedene Bauformen an sich bekannt und von Vorteil kann die Barriereeinrichtung eine Sicherheitsbarriere mit Zehnerdioden und/oder Widerständen und/oder Sicherungen sein.

Ein einfach aufgebautes und preiswertes Ausführungsbeispiel für eine Datenverteileinrichtung ist eine Abzweigdose oder ein Klemmkasten entsprechend in Ex-e- oder Ex-i-Ausführung.

Um bei der Datenkommunikation zwischen Feldgerät und dem Prozessleitrechner über die Datenadaptionseinrichtung eine hohe Übertragungsrate zu ermöglichen, kann das Bussystem insbesondere zwischen Prozessleitrechner und Datenadaptionseinrichtung oder der Trägerplatte, auf der die Datenadaptionseinrichtung aufgesteckt ist, ein Bussystem wie der Profibus oder dergleichen. Solche Bussysteme sind vollständig in der Europanorm EN 50170 genormt.

Zum Anschluss der Trägerplatte an dem Bussystem ist in der Regel ein Buskoppelmodul vorgesehen, das ebenfalls auf der Trägerplatte aufsteckbar ist. Über dieses Buskoppelmodul erfolgt die Kommunikation mit den übrigen auf der Trägerplatte aufgesteckten Modulen, wie beispielsweise der Datenadaptionseinrichtung und/oder der Speiseeinrichtung, wobei diese Kommunikation über einen lokalen Bus erfolg.

Um weitere Feldgeräte über die Trägerplatte mit dem Prozessleitrechner zu verbinden, können I/O-Signalanpassungsmodule auf die Trägerplatte aufsteckbar sein. Mit jedem dieser Signalanpassungsmodule ist wenigstens ein Feldgerät verbindbar.

Beispiele für solche Feldgeräte sind Sensoren oder Aktoren, wie beispielsweise Thermoelemente, Messumformer, Relaisausgänge oder dergleichen.

Das gesamte Prozessleitsystem kann mehr als nur einen Prozessleitrechner (Master) aufweisen, wobei jeder dieser Prozessleitrechner über ein entsprechendes Bussystem mit einer Vielzahl von ihm zugeordneten Feldgeräten verbunden ist. Zur Kommunikation dieser Prozessleitrechner miteinander sowie mit einer übergeordneten Ebene des Prozessleitsystems, kann jeder Prozessleitrechner über eine Hochgeschwindigkeitsdatenübertragungseinrichtung mit einem Server verbunden sein.

Der vorangehend genannte Server kann wiederum mit Eingabeeinrichtungen für zumindest Wartung und Modifikationen des Prozessleitsystems verbunden sein. Beispiele für solche Eingabeeinrichtungen sind Bedienkonsolen für einen Operator oder für Wartungspersonal. Die Konsolen werden über den Server betrieben.

Informationen über den Zustand des Prozessleitsystems gelangen von den Feldgeräten bzw. Sensoren über sogenannte Slaves an die Master. Ein Beispiel für einen solchen Slave ist eine Trägerplatte mit den auf ihr aufgesteckten Modulen. Die Steuerung des Systems erfolgt in umgekehrter Richtung, d. h. vom Master über die Slaves zu den Feldgeräten, hier insbesondere zu den Aktoren.

Die Datenadaptionseinrichtung kann direkt als Slave eingesetzt sein oder Teil eines Slaves sein.

Es sein angemerkt, dass die I/O-Signalanpassungsmodule insbesondere zur Kommunikation mit Aktoren und die Datenadaptionseinrichtungen insbesondere zu Kommunikationen mit Sensoren als Feldgeräten dienen.

Erfindungsgemäß ergibt sich folglich im Vergleich zu einem Prozessleitsystem nach Stand der Technik, dass geringere Kosten pro Sensor anfallen, dass die Montage der Datenadaptionseinrichtung und der Speiseeinrichtung direkt im Ex-Bereich erfolgen kann, dass die Verkabelung erheblich vereinfacht ist und dass bereits vorhandene Busleitungen zwischen sicherem Bereich und Ex-Bereich verwendet werden können. Dies führt weiterhin zu einem übersichtlicheren System und einer vereinfachten Projektierung für ein solches Prozessleitsystem. Schließlich ist noch von Vorteil, dass Datenadaptionseinrichtung und Speiseeinrichtung in bereits bekannte I/O-Systeme integriert werden können, siehe die Trägerplatten mit I/O-Signalanpassungsmodulen und Buskoppelmodulen nach WO 96/31815.

Im Folgenden werden vorteilhafte Ausführungsbeispiele der Erfindung anhand der in der Zeichnung beigefügten Figuren näher erläutert.

Es zeigen:
- Fig. 1: eine prinzipielle Gesamtübersicht über ein erfindungsgemäßes Prozessleit- system;
- Fig. 2: einen Ausschnitt aus Fig. 1, und
- Fig. 3: eine vergrößerte Ausschnittsdarstellung aus Fig. 1, insbesondere mit Daten- adaptionseinrichtung und Datenverteileinrichtung gemäß der Erfindung.

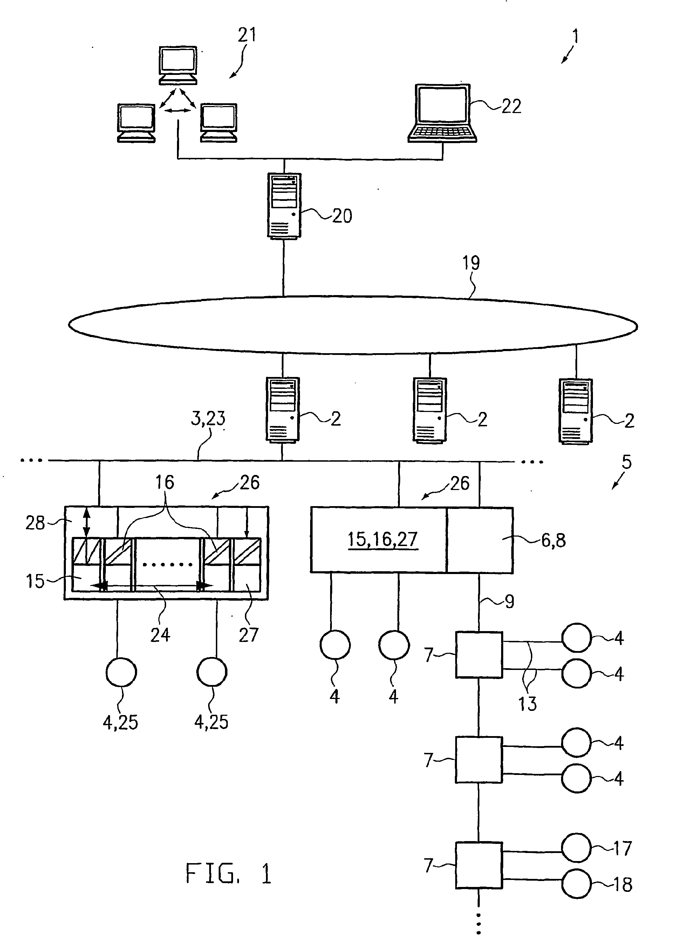

Fig. 1 zeigt einen allgemeinen prinzipiellen Überblick über ein Prozessleitsystem 1. Dieses weist in einer obersten Ebene Eingabeeinrichtungen 21 und 22 auf. Mittels dieser kann beispielsweise ein Operator Daten in das System eingeben oder Wartungspersonal kann Daten aus dem System abfragen. Die Eingabeeinrichtungen 21, 22 sind mit einem Server 20 verbunden. Dieser ist über eine Hochgeschwindigkeitsdatenübertragungseinrichtung 19, wie beispielsweise eine Datenleitung mit hoher Datenrate, mit Prozessleitrechnern 2, den sogenannten Mastern, verbunden.

Jeder der Master 2 ist über ein Bussystem 3, wie beispielsweise einen als Feldbus 23 ausgebildeten Profibus, mit einer Anzahl von sogenannten Slaves 26 einer erfindungsgemäßen Datenübertragungseinrichtung 5 verbunden.

Die Slaves 26 sind wiederum über ex-geschützte Leitungen 9 mit Feldgeräten 4 verbunden. Ein Slave 26 ist beispielsweise mittels eines Buskoppelmoduls 15 mit dem Feldbus 23 verbunden, wobei das Buskoppelmodul 15 auf eine Trägerplatte 28 aufsteckbar ist. Über das Buskoppelmodul 15 erfolgt die Kommunikation mit weiteren auf der Trägerplatte 28 aufgesteckten Modulen, wie I/O-Signalanpassungsmodulen 16 und einem Netzversorgungsmodul 27. Mit jedem der I/O-Signalanpassungsmodule 16 ist beispielsweise ein Aktor 25 als Feldgerät 4 verbunden. Die Kommunikation der I/O-Signalanpassungsmodule 16 mit dem Buskoppelmodul 15 erfolgt über einen lokalen Bus 24. Entsprechende Spannungsversorgungsleitungen sind wie der lokale Bus 24 zur Spannungsversorgung vom Netzversorgungsmodul 27 an der Trägerplatte 28 angeordnet.

In Fig. 1 ist ein weiterer Slave 26 dargestellt, der neben Buskoppelmodul 15 und I/O-Signalanpassungsmodul 16 sowie Netzversorgungsmodul 27 eine Datenadaptionseinrichtung 6 mit wenigstens einer zugeordneten Speiseeinrichtung 8 umfasst. Mittels der Datenadaptionseinrichtung 6 erfolgt eine Anpassung und Umwandlung der von einem System aus Sensoren als Feldgeräte 4, 17, 18 erhaltenen Daten, insbesondere bezüglich der unterschiedlichen Datenübertragungsrate auf dem Feldbus 23.

Mit der Datenadaptionseinrichtung bzw. der Speiseeinrichtung 8 sind über eine explosionsgeschützte Leitung 9 in Reihe geschaltete Datenverteileinrichtungen 7 verbunden. Jede dieser Datenverteileinrichtungen 7 ist über Verbindungsleitungen 13 mit den entsprechenden Feldgeräten 4, 17, 18 verbunden.

Die Anzahl der in Fig. 1 dargestellten Prozessleitrechner 2, Slaves 26, Feldgeräte 4, 17, 18 und Datenverteileinrichtungen 7 ist nur ein Beispiel, da ebenso eine größere Anzahl jeder dieser Einrichtungen in dem erfindungsgemäßen Prozessleitsystem vorhanden sein können.

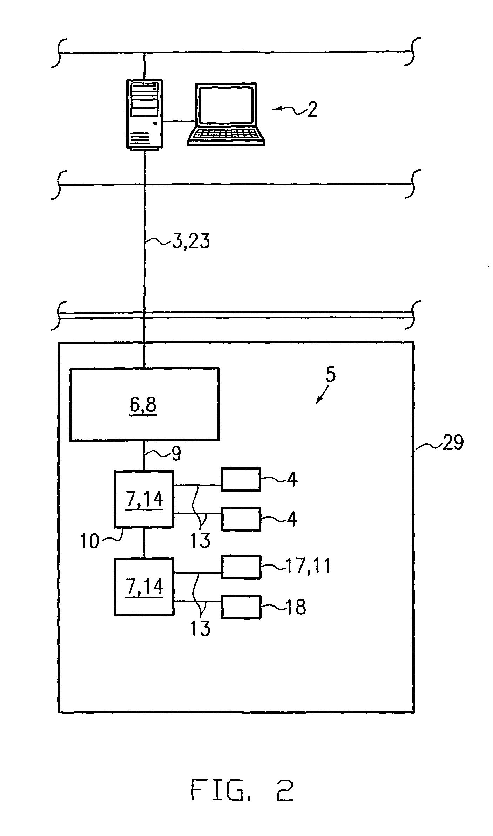

In Fig. 2 ist ein Ausschnitt aus Fig. 1 dargestellt.

In diesem Fall ist die Datenübertragungseinrichtung 5 und insbesondere die Datenadaptionseinrichtung 6 direkt über Feldbus 23 mit dem Prozessleitrechner 2 verbunden. Die Datenübertragungseinrichtung 5 ist in einem Ex-Bereich 29 angeordnet. Die entsprechende Speiseeinrichtung 8 ist über die explosionsgeschützte Leitung 9 mit beispielsweise zwei dargestellten Abzweigdosen 14 als Datenverteileinrichtungen 7 verbunden. Eine der Datenverteileinrichtungen 7 weist eine Barriereeinrichtung 10 aus Dioden, Widerständen oder Sicherungen auf. Die Verbindungsleitungen zwischen der Datenverteileinrichtung 7 mit Barriereeinrichtung 10 und den entsprechenden Feldgeräten 4 ist durch eine eigensichere (ex-i) Leitung gebildet. Die Verbindung zwischen der Datenverteileinrichtung 7 ohne Barriereeinrichtung und den zugehörigen Feldgeräten 17, 18 erfolgt über Leitung 13 mit erhöhter Sicherheit (ex-e).

Die Feldgeräte 4 sind in an sich bekannter Weise ausgebildet, während die Feldgeräte 17, 18 entweder eine Barriereeinrichtung 11 aufweisen oder als druckfest gekapseltes Feldgerät, siehe Feldgerät 18, ausgebildet sind.

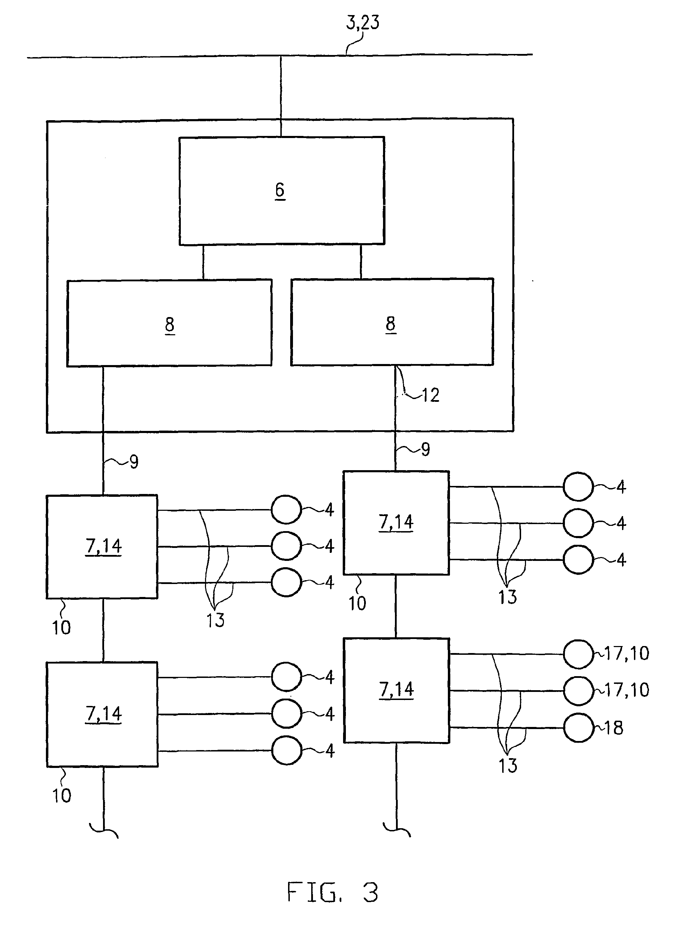

In Fig. 3 ist eine Ausschnittsvergrößerung aus Fig. 1 mit zwei mit einer Datenadaptionseinrichtung 6 verbundenen Speiseeinrichtungen 8 dargestellt.

Jede der Speiseeinrichtungen 8 weist einen Ausgang 12 erhöhter Sicherheit (ex-e) auf, an dem eine Leitung 9 erhöhter Sicherheit angeschlossen ist. An jeder dieser Leitungen 9 sind eine Reihe von Abzweigdosen 14 als Datenverteileinrichtung 7 in Serie verschaltet. Mit jeder der Abzweigdosen 14 sind über Verbindungsleitungen 13 entsprechende Feldgeräte 4, 17, 18 verbunden.

Die in Fig. 3 auf der linken Seite dargestellten Abzweigdosen 14 sind jeweils mit einer Barriereeinrichtung 10 ausgebildet. Entsprechend sind die Verbindungsleitungen 13 eigensicher ausgebildet und die mit diesen verbundenen Feldgeräte 4 sind in üblicher Weise ausgebildet.

Das Vorangehende gilt analog für die in Fig. 3 rechts angeordnete und direkt mit der Speiseeinrichtung 8 verbundene Abzweigdose 14.

Die weitere rechts in Fig. 3 dargestellte Abzweigdose 14 weist eine Barriereeinrichtung 10 auf. Daher sind die entsprechenden Verbindungsleitungen 13 mit erhöhter Sicherheit ausgebildet und die entsprechenden Feldgeräte 17, 18 weisen entweder eine Barriereeinrichtung 10 auf oder sind druckgekapselt, siehe Feldgerät 18.

Im Folgenden sei kurz die Funktion des erfindungsgemäßen Prozessleitsystems, das ebenfalls durch eine speicherprogrammierbare Steuerung gebildet sein kann, anhand der Figuren erläutert.

Durch die Verlagerung der eigensicheren Signalanpassung auf Datenverteileinrichtung und/oder Feldgeräte ist es erfindungsgemäß möglich, die Speisegeräte pro Stromkreis erheblich höher zu belasten. Dadurch sind statt beispielsweise vier Sensoren pro Stromkreis vierzig bis fünfzig oder mehr Sensoren pro Stromkreis anschließbar. Durch die Verbindung von mehreren Speiseeinrichtungen mit einer Datenadaptionseinrichtung erhöht sich die Anzahl der Sensoren pro Datenadaptionseinrichtung nochmals um ein Vielfaches.

Der Aufwand zur Verdrahtung der verschiedenen Einrichtungen ist erheblich reduziert. Von den höheren Ebenen des Prozessleitsystems ist nur eine Busleitung in den Ex-Bereich erforderlich. Datenadaptionseinrichtung, Speiseeinrichtung und Datenverteileinrichtungen sind alle im Ex-Bereich angeordnet und mittels der Datenverteileinrichtungen mit Barriereeinrichtungen oder Datenverteileinrichtungen ohne Barriereeinrichtungen erfolgt die Verbindung zu den einzelnen Sensoren als Feldgeräten. Bei Datenverteileinrichtungen ohne Barriereeinrichtung ist eine solche Barriereeinrichtung in dem entsprechenden Feldgerät integriert oder das Feldgerät ist druckgekapselt ausgeführt.

Es ergibt sich insgesamt bei dem Prozessleitsystem mit erfindungsgemäßer Datenübertragungseinrichtung ein erheblich geringerer Kostenaufwand pro Sensor, die Verkabelung ist vereinfacht und auf wenige Verbindungen reduziert, so dass sich insgesamt ein übersichtlicheres System und eine vereinfachte Projektierung eines solchen Systems ergibt. Außerdem besteht die Möglichkeit, Datenadaptionseinrichtungen und Speiseeinrichtungen in vorhandene I/O-Systeme mit I/O-Signalanpassungsmodul und Buskoppelmodul zu integrieren.

## Patentansprüche

1. Datenübertragungseinrichtung (5) mit
einer Datenadaptionseinrichtung (6), welche Datenadaptionseinrichtung (6) mit zumindest einem Prozessleitrechner (2) verbunden ist,
einer der Datenadaptionseinrichtung (6) zugeordneten Speiseeinrichtung (8) und
einer oder mehreren Datenverteileinrichtungen (7), die jeweils mit zumindest einem Feldgerät (4, 17, 18) verbunden sind,
wobei die Datenübertragungseinrichtung zwischen dem Prozessleitrechner (2) und mit diesem über ein Bussystem (3) verbundenen Feldgerät (4) verschaltet ist, wobei Prozessleitrechner (2) und Feldgeräte (4) Teile eines Prozessleitsystems (1) sind und die Datenübertragungseinrichtung (5) eigensicher ist,
wobei die Speiseeinrichtung (8) über eine explosionsgeschützte Leitung mit der Datenverteileinrichtung (7) verbunden ist, wobei die Datenverteileinrichtung (7) oder mit der Datenverteileinrichtung verbundene Feldgeräte(4, 17, 18) eine Barriereeinrichtung (10, 11) zur Begrenzung der eingespeisten Energie aufweisen,
**dadurch gekennzeichnet,**
**dass** die Datenübertragungseinrichtung (5) mit Netzversorgungsmodulen (27) im Ex-Bereich (29) angeordnet ist und die Datenadaptionseinrichtung (6) und wenigstens die eine ihr zugeordnete Speiseeinrichtung (8) explosionsgeschützt ausgebildet sind.

2. Datenübertragungseinrichtung nach Anspruch 1, **dadurch gekennzeichnet, dass** die Datenadaptionseinrichtung (6) und/oder die Speiseeinrichtung (8) auf einer Trägerplatte (28) aufsteckbar sind, die einen Feldbus (23) zur Kommunikation der Einrichtungen (6, 8) untereinander und mit dem Prozessleitrechner (2) aufweist.

3. Datenübertragungseinrichtung nach Anspruch 1 oder 2, **dadurch gekennzeichnet, dass** die Datenadaptionseinrichtung (6) eine Datenanpassungs- und/oder Datenwandelschaltung aufweist.

4. Datenübertragungseinrichtung nach wenigstens einem der vorangehenden Ansprüche, **dadurch gekennzeichnet, dass** die Datenadaptionseinrichtung (6) und/oder die Speiseeinrichtung (8) explosionsgeschützt gekapselt sind.

5. Datenübertragungseinrichtung nach wenigstens einem der vorangehenden Ansprüche, **dadurch gekennzeichnet, dass** die Speiseeinrichtung (8) wenigstens einen Ausgang (12) mit erhöhter Sicherheit (ex-e) aufweist.

6. Datenübertragungseinrichtung nach wenigstens einem der vorangehenden Ansprüche, **dadurch gekennzeichnet, dass** die Datenverteileinrichtung (7) und/oder die Feldgeräte (4, 17, 18) zur eigensicheren (ex-i) Signalanpassung ausgebildet sind.

7. Datenübertragungseinrichtung nach wenigstens einem der vorangehenden Ansprüche, **dadurch gekennzeichnet, dass** die Barriereeinrichtung (10, 11) im Feldgerät (4, 17, 18) oder in der Datenverteileinrichtung (7) integriert ist.

8. Datenübertragungseinrichtung nach wenigstens einem der vorangehenden Ansprüche, **dadurch gekennzeichnet, dass** die Barriereeinrichtung (10, 11) eine Sicherheitsbarriere mit Zehnerdioden und/oder Widerstand und/oder Sicherungen ist.

9. Datenübertragungseinrichtung nach wenigstens einem der vorangehenden Ansprüche, **dadurch gekennzeichnet, dass** Datenverteileinrichtung (7) und Feldgerät (4, 17, 18) mittels Verbindungsleitungen (13) in eigensicherer (ex-i) oder erhöhter (ex-e) Sicherheit verbunden sind.

10. Datenübertragungseinrichtung nach wenigstens einem der vorangehenden Ansprüche, **dadurch gekennzeichnet, dass** die Datenverteileinrichtung (7) eine Abzweigdose (14) ist.

11. Datenübertragungseinrichtung nach wenigstens einem der vorangehenden Ansprüche, **dadurch gekennzeichnet, dass** das Bussystem (3) zwischen Prozessleitrechner (2) und Trägerplatte bzw. Buskoppelmodul (15) auf der Trägerplatte ein Profibus oder dergleichen ist.

12. Datenübertragungseinrichtung nach wenigstens einem der vorangehenden Ansprüche, **dadurch gekennzeichnet, dass** I/O-Signalanpassungsmodule (16) auf der Trägerplatte aufsteckbar sind.

13. Datenübertragungseinrichtung nach wenigstens einem der vorangehenden Ansprüche, **dadurch gekennzeichnet, dass** die Feldgeräte (4, 17, 18) Sensoren und/oder Aktoren sind.

14. Datenübertragungseiririchtung nach wenigstens einem der vorangehenden Ansprüche, **dadurch gekennzeichnet, dass** der Prozessleitrechner (2) über eine Hochgeschwindigkeitsdatenübertragungseinrichtung (19) mit einem Server (20) verbunden ist.

15. Datenübertragungseinrichtung nach wenigstens einem der vorangehenden Ansprüche, **dadurch gekennzeichnet, dass** der Server (20) mit einer Eingabeeinrichtung (21, 22) für zumindest Wartung und Modifikation des Prozessleitsystems (1) verbunden ist.

16. Datenübertragungseinrichtung nach wenigstens einem der vorangehenden Ansprüche, **dadurch gekennzeichnet, dass** die Datenadaptionseinrichtung (6) direkt mit dem Prozessleitrechner (2) verbunden ist.

## Claims

1. Data transmission device (5) with a data adaptation device (6) connected to at least a process control computer, a supply device (8) assigned to the data adaptation device (6), and one or more data distributing devices (7), each connected to a field unit (4, 17, 18) which data transmission device is connected between the process control computer (2) and said field units (4) connected thereto via a bus system (3), wherein the process control computer (2) and the field units (4) are parts of a process control system (1) and the data transmission device (5) is intrinsically safe, wherein the supply device (8) is connected to the data distributing device (7) via an explosion-proof line, wherein either this device or the field units (4, 17, 18) connected thereto have a barrier device (10, 11) for limiting the applied power, **characterised in that** the data transmission device (5) with power supply modules (27) is arranged in an Ex-area (29) and the data adaptation device (6) and at least the supply device (8) assigned thereto are formed so that they are explosion-proof.

2. Data transmission device according to Claim 1, **characterised in that** the data adaptation device (6) and / or the supply device (8) can be mounted on a backwall plate (28), which has a field bus (23) for communication among the devices (6, 8) and with the process control computer (2).

3. Data transmission device according to Claim 1 or 2, **characterised in that** the data adaptation device (6) has a data matching and / or data converting circuit.

4. Data transmission device according to at least one of the preceding Claims, **characterised in that** the data adaptation device (6) and / or the supply device (8) are encapsulated in an explosion-proof manner.

5. Data transmission device according to at least one of the preceding Claims, **characterised in that** the supply device (8) has at least one output (12) with extended safety (Ex-e).

6. Data transmission device according to at least one of the preceding Claims, **characterised in that** the data distributing device (7) and / or to field units (4, 17, 18) is formed for intrinsically safe (Ex-i) signal matching.

7. Data transmission device according to at least one of the preceding Claims, **characterised in that** the barrier device (10, 11) is integrated in the field unit (4, 17, 18) or in the data distributing device (7).

8. Data transmission device according to at least one of the preceding Claims, **characterised in that** the barrier device (10, 11) is a safety barrier with Zener diodes and / or resistors and / or fuses.

9. Data transmission device according to at least one of the preceding Claims, **characterised in that** the data distributing device (7) and field unit (4, 17, 18) are connected by means of connection lines (13) rated as intrinsically safe (Ex-i) or having extended safety (Ex-e).

10. Data transmission device according to at least one of the preceding Claims, **characterised in that** the data distributing device (7) is a junction box (14).

11. Data transmission device according to at least one of the preceding Claims, **characterised in that** the bus system (3) between the process control computer (2) and backwall plate or bus interface module (15) on the backwall plate is a Profibus or the like.

12. Data transmission device according to at least one of the preceding Claims, **characterised in that** I/O signal matching modules (16) can be mounted on the backwall plate.

13. Data transmission device according to at least one of the preceding Claims, **characterised in that** the field units (4, 17, 18) are sensors and / or actuators.

14. Data transmission device according to at least one of the preceding Claims, **characterised in that** the process control computer (2) is connected to a server (20) via a high-speed data transmission device (19).

15. Data transmission device according to at least one of the preceding Claims, **characterised in that** the server (20) is connected to an input device (21, 22) for, at least, maintenance and modification of the process control system (1).

16. Data transmission device according to at least one of the preceding Claims, **characterised in that** the data adaptation device (6) is connected directly to the process control computer (2).

## Revendications

1. Dispositif de transmission de données (5) avec
un dispositif d'adaptation de données (6), ledit dispositif d'adaptation de données (6) étant relié à au moins un ordinateur de commande de processus (2),
un dispositif d'alimentation (8) attribué au dispositif d'adaptation de données (6), et
un ou plusieurs dispositifs de répartition de données (7) qui sont reliés respectivement à au moins un appareil de terrain (4, 17, 18),
dans lequel le dispositif de transmission de données est interconnecté entre l'ordinateur de commande de processus (2) et un appareil de terrain (4) relié à celui-ci par un système de bus (3), dans lequel l'ordinateur de commande de processus (2) et les appareils de terrain (4) font partie d'un système de commande de processus (1) et le dispositif de transmission de données (5) est à sécurité intrinsèque,
dans lequel le dispositif d'alimentation (8) est relié au dispositif de répartition de données (7) par une ligne protégée contre les explosions, dans lequel le dispositif de répartition de données (7) ou des appareils de terrain (4, 17, 18) reliés au dispositif de répartition de données présentent une barrière (10, 11) pour limiter l'énergie alimentée,
**caractérisé en ce que**
le dispositif de transmission de données (5) avec des modules d'alimentation secteur (27) est disposé en zone Ex (29) et le dispositif d'adaptation de données (6) et au moins l'un dispositif d'alimentation (8) qui lui est associé, sont réalisés en étant protégés contre les explosions.

2. Dispositif de transmission de données selon la revendication 1, **caractérisé en ce que** le dispositif d'adaptation de données (6) et/ou le dispositif d'alimentation (8) sont enfichables sur une platine (28) qui présente un bus de terrain (23) pour une communication des dispositifs (6, 8) entre eux et avec l'ordinateur de commande de processus (2).

3. Dispositif de transmission de données selon la revendication 1 ou 2, **caractérisé en ce que** le dispositif d'adaptation de données (6) présente un circuit d'adaptation de données et/ou de conversion de données.

4. Dispositif de transmission de données selon au moins l'une quelconque des revendications précédentes, **caractérisé en ce que** le dispositif d'adaptation de données (6) et/ou le dispositif d'alimentation (8) se trouvent sous coffret antidéflagrant.

5. Dispositif de transmission de données selon au moins l'une quelconque des revendications précédentes, **caractérisé en ce que** le dispositif d'alimentation (8) présente au moins une sortie (12) à sécurité augmentée (Ex-e).

6. Dispositif de transmission de données selon au moins l'une quelconque des revendications précédentes, **caractérisé en ce que** le dispositif de répartition de données (7) et/ou les appareils de terrain (4, 17, 18) sont réalisés pour une adaptation de signal à sécurité intrinsèque (Ex-i).

7. Dispositif de transmission de données selon au moins l'une quelconque des revendications précédentes, **caractérisé en ce que** la barrière (10, 11) est intégrée dans l'appareil de terrain (4, 17, 18) ou dans le dispositif de répartition de données (7).

8. Dispositif de transmission de données selon au moins l'une quelconque des revendications précédentes, **caractérisé en ce que** la barrière (10, 11) est une barrière de sécurité à diodes Zener et/ou résistance et/ou fusibles.

9. Dispositif de transmission de données selon au moins l'une quelconque des revendications précédentes, **caractérisé en ce que** le dispositif de répartition de données (7) et l'appareil de terrain (4, 17, 18) sont reliés au moyen de lignes de connexion (13) à sécurité intrinsèque (Ex-i) ou à sécurité augmentée (Ex-e).

10. Dispositif de transmission de données selon au moins l'une quelconque des revendications précédentes, **caractérisé en ce que** le dispositif de répartition de données (7) est une boîte de dérivation (14).

11. Dispositif de transmission de données selon au moins l'une quelconque des revendications précédentes, **caractérisé en ce que** le système de bus (3) entre l'ordinateur de commande de processus (2) et la platine ou le module de couplage de bus (15) sur la platine est un Profibus ou similaires.

12. Dispositif de transmission de données selon au moins l'une quelconque des revendications précédentes, **caractérisé en ce que** des modules d'adaptation de signal d'E/S (16) sont enfichables sur la platine.

13. Dispositif de transmission de données selon au moins l'une quelconque des revendications précédentes, **caractérisé en ce que** les appareils de terrain (4, 17, 18) sont des capteurs et/ou actionneurs.

14. Dispositif de transmission de données selon au moins l'une quelconque des revendications précédentes, **caractérisé en ce que** l'ordinateur de commande de processus (2) est relié à un serveur (20) par un dispositif de transmission de données rapide (19).

15. Dispositif de transmission de données selon au moins l'une quelconque des revendications précédentes, **caractérisé en ce que** le serveur (20) est relié à un dispositif d'entrée (21, 22) pour au moins la maintenance et la modification du système de commande de processus (1).

16. Dispositif de transmission de données selon au moins l'une quelconque des revendications précédentes, **caractérisé en ce que** le dispositif d'adaptation de données (6) est relié directement à l'ordinateur de commande de processus (2).
